# EUROPÄISCHE PATENTANMELDUNG

(11) **EP 2 573 132 A2**
(43) Veröffentlichungstag der Anmeldung: **27.03.2013**
(21) Anmeldenummer: 12180993.3
(22) Anmeldetag: 20.08.2012
(51) Int. Cl.: C08J 9/00

(54) **Verbundwerkstoffe umfassend eine offenzellige Polymermatrix und darin eingebettete Granulate**

(30) Priorität: 20.09.2011 DE 102011083017
(71) Anmelder: Evonik Industries AG, 45128 Essen (DE)
(72) Erfinder: Eilbracht, Christian, 44627 Herne (DE); Schiller, Carsten, 40885 Ratingen (DE); Glos, Martin, 46325 Borken (DE); Markowz, Georg, 63755 Alzenau (DE); Schultz, Thorsten, 64739 Hassenroth (DE)

(57) **Zusammenfassung**

Die vorliegende Erfindung ist gerichtet auf Verbundwerkstoffe umfassend eine offenzellige Polymerschaummatrix enthaltend ein oder mehrere Polymere und eingebettet in die Polymerschaummatrix Granulate oder Formkörper, die eine offene Porosität aufweisen, ein Verfahren zur Herstellung entsprechender Verbundwerkstoffe sowie der Verwendung als Dämm- und Isolationsmaterial.

## Beschreibung

Die vorliegende Erfindung ist gerichtet auf Verbundwerkstoffe umfassend eine offenzellige Polymerschaummatrix enthaltend ein oder mehrere Polymere und eingebettet in die Polymerschaummatrix Granulate oder Formkörper, die eine offene Porosität aufweisen, ein Verfahren zur Herstellung entsprechender Verbundwerkstoffe sowie der Verwendung als Dämm- und Isolationsmaterial.

Stand der Technik bei der Wärmedämmung sind Vakuum-Isolationspaneele (VIP), die durch Umhüllung eines porösen Kernmaterials - z.B. verdichteter pyrogener Kieselsäure (Aerosil), Fasermatten oder offenzelligen Schaumstoffen - mit einer gasdichten Folie und anschließender Evakuierung hergestellt werden. Diese Paneele ermöglichen eine ausgezeichnete Wärmedämmung (Wärmeleitfähigkeiten < 3,5*10⁻³ W*m⁻¹*K⁻¹, bestimmt gemäß DIN 52 612, bei 10 °C, sind realisierbar), die Dämmwirkung verschlechtert sich aber bei Verletzung der gasdichten Folie deutlich. Die Paneele müssen folglich mit den jeweils gewünschten Abmessungen produziert und geschützt verbaut werden (http://www.va-q-tec.com/).

Das verwendete Kernmaterial hat wesentlichen Einfluss auf die Eigenschaften eines Vakuum-Isolationspaneels. Zum einen bestimmt das Kernmaterialien - neben dem Gas und dessen Restdruck im evakuierten Paneel - die Wärmeleitfähigkeit und damit die Leistungsfähigkeit als Wärmedämmung, zum anderen hängen auch die mechanischen Eigenschaften wie Druckfestigkeit, Bruchempfindlichkeit und Formstabilität wesentlich von Kernmaterial ab.

Der Einfluss des Kernmaterials auf die Wärmeleitfähigkeit lässt sich in zwei Mechanismen unterteilen. Der erste ist ein direkter Beitrag zur Wärmeleitfähigkeit durch Wärmeleitung in der festen Phase des Kernmaterials. Der zweite und wichtigere Mechanismus ist ein indirekter Beitrag durch Beeinflussung der Gasphasen-Wärmeleitfähigkeit: besitzt das Kernmaterial ein sehr fein strukturiertes Porensystem, kann die Gasphasenwärmeleitfähigkeit - besonders bei niedrigen Gasdrücken - unter den für die Gaszusammensetzung zu erwartenden Wert absinken. Diesen Effekt nennt man Knudsen-Effekt. Er tritt auf, wenn die freie Weglänge der Gasmoleküle größer ist als der Durchmesser der Poren, in denen sich das Gas befindet. Stöße der Gasmoleküle mit der Porenwandung werden dann wahrscheinlicher als Stöße der Gasmoleküle untereinander. Dies kann soweit gehen, dass Stöße der Gasmoleküle untereinander vollständig unterdrückt werden. Ohne Stöße findet keine Übertragung der Wärmeenergie statt und die Gasphasenwärmeleitung wird ausgeschaltet. Folglich ist ein Kernmaterial in VIPs umso effizienter, je kleiner die mittleren Porendurchmesser sind. Kleine Porendurchmesser führen dazu, dass der Knudsen-Effekt schon bei höheren Gasdrücken einsetzt und der Druck nicht so weit angesenkt werden muss, um die Gasphasen-Wärmeleitfähigkeit fast ganz zu unterdrücken. Eine ausführliche Diskussion dieser Zusammenhänge einschließlich von Messungen der Druckabhängigkeit der Wärmeleitfähigkeit verschiedener Kernmaterialien findet sich unter www.ecbcs.org/docs/Annex_39_Report_Subtask-A.pdf.

Diese Messungen belegen, dass Kieselsäure, insbesondere zu Platten / Formkörpern verdichtete pyrogene Kieselsäure, ein besonders vorteilhaftes Kernmaterial für Vakuum-Isolationspaneele darstellt. Die außergewöhnlich feine Strukturierung dieser Pulver führt zu einem ausgeprägten Knudsen-Effekt. Nachteilig sind dagegen die schlechten mechanischen Eigenschaften dieses Kernmaterials. Presslinge aus verdichteten Pulvern sind naturgemäß druckempfindlich und brechen leicht.

Die ebenfalls zum Stand der Technik zählenden offenzelligen Polymerschäume weisen in der Regel wesentlich bessere mechanische Eigenschaften auf und lassen sich durch Zuschneiden in beliebige Form bringen, erfordern aber aufgrund der viel größeren Porendurchmesser einen sehr niedrigen Restdruck, um die gleichen Isolationseigenschaften wie Paneele mit Kernen aus kompaktierter Kieselsäure zu erreichen.

Aufgabe der vorliegenden Erfindung war deshalb die Bereitstellung eines Kernmaterials für Vakuum-Isolationsanwendungen (Paneele oder sonstige Formkörper), welches die überragende Druckabhängigkeit der Wärmeleitfähigkeit von kompaktierter Kieselsäure mit den guten mechanischen Eigenschaften von offenzelligen Polymerschaumstoffen kombiniert.

Überraschenderweise wurde gefunden, dass ein Verbundwerkstoff, der eine offenzellige Polymerschaummatrix, in welche Granulate bzw. (allgemein) Formkörper mit offener Porosität eingebettet sind, diese Aufgabe löst.

Gegenstand der vorliegenden Erfindung sind deshalb Verbundwerkstoffe umfassend eine offenzellige Polymerschaummatrix enthaltend ein oder mehrere Polymere, und eingebettet in die Polymerschaummatrix Granulate und/oder Formkörper, die ebenfalls eine offene Porosität aufweisen.

Ebenfalls Gegenstand der vorliegenden Erfindung ist ein Verfahren zur Herstellung eines erfindungsgemäßen Verbundwerkstoffs, bei dem ein Material zur Herstellung einer Polymerschaummatrix mit Granulaten und/oder Formkörpern vermischt wird, die eine offene Porosität aufweisen, und aus dieser Mischung eine offenzellige Polymerschaummatrix erzeugt wird, in welcher die Granulate eingebettet sind.

Außerdem sind Gegenstand der vorliegenden Erfindung die Verwendung eines erfindungsgemäßen Verbundwerkstoffs oder eines erfindungsgemäß erhältlichen Verbundwerkstoffs als Isolations- und/oder Dämmmaterial, insbesondere Vakuum-Isolationselemente, sowie Gegenstände die die Verbundwerkstoffe aufweisen.

Die erfindungsgemäßen Verbundwerkstoffe haben den Vorteil, dass sie in nahezu jeder erdenklichen Form und Größe hergestellt werden können. Zudem können die erfindungsgemäßen Verbundmaterialien durch Beschneiden auf beliebige Größen und Formen gebracht werden. Die erfindungsgemäßen Verbundwerkstoffe sind damit wesentlich vielseitiger als oder zur Herstellung von Vakuum-Isolationselementen einsetzbar und ergeben mechanisch robustere Endprodukte als die aus dem Stand der Technik bekannten kompaktierten Kieselsäuren, erfordern aber gleichzeitig nicht so niedrige Restdrücke wie offenzellige Polymerschaumstoffe.

Vakuum-Isolationselemente aus den erfindungsgemäßen Verbundwerkstoffe bzw. diese selbst haben außerdem den Vorteil, dass sie eine Wärmeleitfähigkeit (bestimmt gemäß DIN 52 612, bei 10 °C) von kleiner 18*10⁻³ W*m⁻¹*K⁻¹ aufweisen.

Die erfindungsgemäßen Verbundwerkstoffe, das Verfahren zu ihrer Herstellung sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Wenn im nachfolgenden Mittelwerte angegeben sind, so handelt es sich, wenn nicht anders angegeben, um das Zahlenmittel. Wenn im nachfolgenden Angaben in Prozent angegeben sind, so handelt es sich, wenn nicht anders angegeben, um Massen-%.

Die erfindungsgemäßen Verbundwerkstoffe zeichnen sich dadurch aus, dass sie eine Polymerschaummatrix, enthaltend ein oder mehrere Polymere, und eingebettet in die Polymerschaummatrix Granulate bzw. Formkörper mit offener Porosität, umfassen. Der Massen-Anteil der Granulate an dem Verbundwerkstoff beträgt vorzugsweise 20 bis 99 Massen-%, bevorzugt 50 bis 90 Massen-%. Die Granulate bzw. Formkörper können im Wesentlichen aus einem oder mehreren organischen und/oder aus einem oder mehreren anorganischen Materialien bestehen. Der Ausdruck im Wesentlichen soll dabei einen Massen-%-Anteil von mindestens 70 %, bevorzugt mindestens 90 % bezogen auf die Gesamtmasse des Granulats bedeuten. Vorzugsweise bestehen die Granulate im Wesentlichen aus anorganischen Materialien, insbesondere aus Sauerstoff enthaltenden Verbindungen oder Salzen der Metalle oder Halbmetalle. Bevorzugte Sauerstoff enthaltende Verbindungen sind Aluminiumoxide oder Alumosilkate oder Siliziumdioxide bzw. Kieselsäuren, insbesondere pyrogene oder gefällte Kieselsäuren. Ganz besonders bevorzugte Granulate bestehen im Wesentlichen aus kompaktierten Pulvern aus pyrogener Kieselsäure und/oder, vorzugsweise oder Fällungskieselsäure. Daneben können verschiedene Trübungsmittel wie beispielsweise SiC, Carbon Black, Graphit, Eisenoxide oder TiO₂ allein oder in Kombination mit Anteilen von bevorzugt 1 bis 30 Massen-%, besonders bevorzugt 5 bis 10 Massen-% (bezogen auf die Granulat- bzw. Pulvermasse) enthalten sein. Durch das Vorhandensein von Trübungsmittel kann ggf. eine Reduzierung der Strahlungs-Wärmeleitung erreicht werden. Des Weiteren können die Granulate bzw. Formkörper Fasern zur mechanischen Stabilisierung, beispielsweise Glas-, Keramik- oder Polymerfasern, sowie Hilfsstoffe aus dem Granulierungsverfahren, beispielsweise Binder, enthalten.

Die Granulate weisen vorzugsweise eine mittlere Korngröße d₅₀ von 50 µm bis 100 mm, bevorzugt von 100 µm bis 50 mm und besonders bevorzugt von 0,5 mm bis 20 mm auf (ermittelt nach DIN 66165-2). Zur Erlangung eines möglichst hohen Füllgrads und/oder zur Verbesserung der Verarbeitung kann es sinnvoll sein, gezielte Verteilungen der Korngrößenverteilung, wie beispielsweise bi- oder trimodale Verteilungen, zu verwenden. Alternativ zu Granulaten mit einer vom Granulierungsverfahren abhängigen Größenverteilung und Form der Granulat-Körner können auch Formkörper mit definierter Geometrie verwendet werden, beispielsweise Kugeln oder Quader. Hierbei gelten für die bevorzugten Abmessungen in die drei Raumrichtungen entsprechende Bereiche wie für die mittlere Korngröße der Granulate. Entsprechende Formkörper werden nachfolgend ebenfalls als Granulate bezeichnet.

Erfindungswesentlich ist, dass die einzelnen Körner des Granulates jeweils eine offene Porosität aufweisen. Morphologisch betrachtet kann es sich dabei um ein Netzwerk aus offenen Poren bzw. Kanälen handeln. Bevorzugt bestehen die Granulat-Körner bzw. Formkörper im Wesentlichen aus verdichteten Pulvern, so dass zwischen den einzelnen Primärpartikeln ein offenes Porensystem bestehen bleibt. Besonders bevorzugt werden sehr feinteilige bis nano-strukturierte Pulver eingesetzt, so dass entsprechend fein strukturierte Porensysteme entstehen. Bevorzugte Pulver bzw. eingesetzt Materialien weisen eine BET-Oberfläche von größer 5 m²/g, besonders bevorzugt von 50 m²/g bis 1000 m²/g (nach ISO 9277) auf.

Die in der Polymermatrix vorhandenen Granulate weisen vorzugsweise eine Porosität Φ, d.h. ein Verhältnis vom Volumen des abgeschlossenen Hohlraums zum Gesamtvolumen des Granulatkorns, von 50% bis 99,9%, bevorzugt von 75% bis 99% auf. Das Gesamtvolumen des Granulats bzw. eines Granulatkorns oder Formkörpers mit abgeschlossenem Hohlraum kann durch Bestimmung des verdrängten Volumens einer geeigneten nicht benetzenden Flüssigkeit, z.B. Quecksilber bestimmt werden. Das Volumen der Poren (offene und geschlossene Poren) kann dadurch bestimmt werden, dass vom Gesamtvolumen das Volumen des Feststoffes des Granulats abgezogen wird. Das Volumen des Feststoffs kann bei bekannter Dichte des Materials des Feststoffes einfach aus der bestimmten Masse errechnet werden oder aber die Granulate, von denen das Gesamtvolumen bestimmt wurde, werden bis zu einer mittleren Korngröße d₅₀ von 20 µm gemahlen oder gemörsert und von dem so erhaltenen Pulver wird das Volumen bzw. die Dichte bestimmt.

Die Polymerschaummatrix, in die die Granulat-Körner bzw. die Formkörper eingebettet sind, ist (weitgehend) offenzellig ausgeführt. Die Offenzelligkeit kann mittels Gaspyknometrie durch Entnahme von Probekörpern der Polymerschaummatrix aus Bereichen zwischen den Granulat-Körnern, ggf. auch durch Herstellung von Probekörpern des Polymerschaums ohne Zugabe von Granulaten, gemessen werden. Vorzugsweise beträgt die Offenzelligkeit der Polymerschaummatrix, in die die Granulat-Körner bzw. die Formkörper eingebettet sind, größer 50 %, besonders bevorzugt größer 80 % (bestimmt gemäß DIN 4590).

Die Polymerschaummatrix kann alle bekannten, insbesondere verschäumbaren Polymere einzeln oder in Mischungen enthalten. Besonders bevorzugte Polymere, die in der Polymermatrix enthalten sein können, sind z.B. ausgewählt aus Polystyrol (PS), Polyurethan (PU), Polymethylmethacrylat (PMMA). Besonders bevorzugt als Polymermatrix sind solche, die PUR- oder PIR-Hartschaumstoffe enthalten. Zur Herstellung einer Polymerschaummatrix können gängige Herstellungsverfahren, wie z. B. RIM-Verfahren (reaction injection moulding) oder Extrusions-Verfahren, eingesetzt werden.

Wie schon beim Granulat genannt, kann auch die Polymermatrix ein Trübungsmittel enthalten. Ein solches Trübungsmittel kann wiederum z.B. ausgewählt sein aus Ruß (Carbon Black), TiO₂, Graphit oder SiC, wobei sich Art und Anteil des Trübungsmittels in der Polymermatrix von dem im Granulat unterscheiden können. Der Anteil an Trübungsmittel beträgt bezogen auf die Gesamtmasse der Polymermatrix vorzugsweise 0,5 bis 30 Massen-%, bevorzugt 1 bis 10 Massen-%.

Erfindungswesentlich ist, dass nicht nur die einzelnen Komponenten des Verbundwerkstoffs - jeweils separat betrachtet - eine offene Porosität aufweisen, sondern dass im Verbundwerkstoff die Porensysteme in den Granulat-Körnern mit dem Porensystem der Polymerschaummatrix verbunden sind, d.h. eine durchgängig offene Porosität im gesamten Material besteht. Nur so ist das Material beim Anlegen eines äußeren Vakuums im gesamten Volumen evakuierbar - eine für die Anwendung als Kernmaterial in Vakuum-Isolationsanwendungen essentielle Voraussetzung. Messbar wird dies durch gaspyknometrische Bestimmung der Offenzelligkeit von Probekörpern aus dem fertigen Verbundwerkstoff. Vorzugsweise beträgt die Offenzelligkeit größer 50 %, besonders bevorzugt sind Offenzelligkeiten von größer 80 % (bestimmt gemäß DIN 4590).

Es kann vorteilhaft sein, wenn in den offenen Poren der Polymerschaummatrix (und den offenen und zugänglichen Poren des Granulats) ein Druck vorliegt, der kleiner als der Normaldruck (1 bar) ist. Vorzugsweise liegt in den offenen Poren der Polymerschaummatrix ein Druck von kleiner 500 mbar, bevorzugt von 0,001 bis 200 mbar vor. Um einen Druckausgleich zwischen offenen Poren der Polymerschaummatrix und der Umgebungsatmosphäre zu verhindern weist der erfindungsgemäße Verbundwerkstoffe die Polymerschaummatrix, vorzugsweise in einer gasdichten Hülle aus Metall, Glas, Kunststoff oder einem Verbund aus diesen Materialien - beispielsweise einer metallisierten Kunststofffolie - auf. Solche Verbunde aus mehreren Materialien können z. B. Mehrschicht-Laminate z. B. mit Polyethylenterephthalat-Außernschicht (PET-Außenschicht), Aluminium-BarriereSchicht und Polyethylen-Innenschicht sein.

Es kann vorteilhaft sein, die Zusammensetzung der Gasatmosphäre in den Poren der Polymerschaummatrix (und den offenen und zugänglichen Poren des Granulats) vor der Evakuierung bzw. der Einstellung des Drucks gezielt einzustellen. Vorzugsweise wird die Gaszusammensetzung so gewählt, dass eine niedrige Wärmeleitfähigkeit erreicht wird. Bevorzugte Gase mit niedriger Gasphasenwärmeleitfähigkeit sind die typischen Treibgase wie beispielsweise CO₂, Kohlenwasserstoffe mit 3 bis 5 Kohlenstoff-Atomen, bevorzugt cyclo-, iso- und n-Pentan, Fluorkohlenwasserstoffe (gesättigt sowie ungesättigt), bevorzugt HFC 245fa, HFC 134a und HFC 365mfc, Fluorchlorkohlenwasserstoffe (gesättigt sowie ungesättigt), bevorzugt HCFC 141b, Sauerstoff-haltige Verbindungen wie Methylformiat und Dimethoxymethan, oder Chlorkohlenwasserstoffe, bevorzugt 1,2-Dichlorethan. Es kann aber auch vorteilhaft sein, wenn ein Gas mit kleiner Molmasse (kleiner 21 g/mol), beispielsweise Wasserstoff, Helium, Methan, Ammoniak, Wasser oder Neon, als Isolationsgas in den Poren der Polymerschaummatrix und/oder des Granulats vorhanden ist.

Der erfindungsgemäße Verbundwerkstoff ist vorzugsweise ein Vakuum-Isolationselement oder wird als Vakuum-Isolationselement oder zu dessen Herstellung verwendet.

Die erfindungsgemäßen Verbundwerkstoffe können auf verschiedene Weise hergestellt werden. Bevorzugte erfindungsgemäße Verbundwerkstoffe sind solche, die durch das erfindungsgemäße Verfahren erhältlich sind, welches nachfolgend beschrieben wird.

Das erfindungsgemäße Verfahren zur Herstellung eines erfindungsgemäßen Verbundwerkstoffs zeichnet sich dadurch aus, dass ein Material zur Herstellung einer Polymerschaummatrix mit Granulaten vermischt wird, die eine offene Porosität aufweisen, und aus dieser Mischung eine Polymerschaummatrix erzeugt wird, in welcher die Granulate bzw. Formkörper eingebettet sind.

Die eingesetzten Granulate (bzw. Formkörper) werden bevorzugt aus pulverförmigen Vorstufen mit zuvor beschriebener Zusammensetzung und Eigenschaften hergestellt. Dazu können alle gängigen Granulierungs- und Tablettierungsverfahren, wie z. B. Wirbelschichtgranulation, Kompaktierung und ggf. Brechen oder Niederdruck-Extrusion ggf. unter Verwendung von Flüssigkeiten zur Dispergierung und/oder zusätzlichen Bindern verwendet werden. Derart erhältliche Granulate bzw. Formkörper weisen eine offene Porosität auf.

Um zu vermeiden, dass die Granulate beim folgenden Einbetten in die Polymerschaum-Matrix durch eine kompakte Hülle aus dem Polymer an der Oberfläche der Granulatkörner eingekapselt werden und dadurch die Verbindung der Porensysteme in Granulatkörnern und Matrix unterbrochen wird, kann es erforderlich sein, die Benetzungseigenschaften zwischen Polymer und Granulat durch eine Oberflächenmodifizierung einzustellen. Die Oberflächenmodifizierung kann entweder auf der Stufe des pulverförmigen Ausgangsmaterials der Granulate erfolgen - alternative können auch kommerziell erhältliche, bereits Oberflächenmodifizierte Pulver verwendet werden - oder die Modifizierung erfolgt während der Granulierung oder - als dritte Möglichkeit - nach der Granulierung an den fertigen Granulatkörnern. Als Methoden zur Oberflächenmodifizierung können alle dem Fachmann geläufigen Verfahren eingesetzt werden, beispielsweise das Bedampfen, Besprühen oder Tränken mit bzw. das Tauchen in einem Modifizierungs-Agens. Als Modifizierungs-Agens kommen die verschiedensten Substanzen in Frage, die entweder physikalisch auf die Oberfläche aufziehen oder chemisch an sie binden. Bevorzugte Modifizierungs-Agentien sind Siloxane und Silane aller Art, besonders bevorzugt Chlorsilane, beispielsweise Dimethyldichlorsilan oder Chlortrimethylsilan, Alkoxysilane, beispielsweise Alkyltriethoxysilane, Silazane, beispielsweise Hexamethyldisilazan, sowie cyclische oder lineare Oligo- oder Poly-dimethylsiloxane. Auch physikalische Methoden zur Oberflächenmodifizierung können eingesetzt werden, wie beispielsweise eine Plasmabehandlung.

Als Material zur Herstellung der Polymerschaummatrix kann ein Polymer oder eine Mischung von Polymeren oder die Edukte zur Erzeugung des/der Polymeren verwendet werden. Die Menge an einzusetzenden Granulaten/Formkörpern und einzusetzendem Polymeren bzw. deren Ausgangstoffen wird vorzugsweise so gewählt, dass der erhaltene Verbundwerkstoff den oben als bevorzugt angegebenen Massenanteil an Granulaten/Formkörpern aufweist.

Es kann vorteilhaft sein, wenn das erfindungsgemäße Verfahren zumindest einen Verfahrensschritt enthalten ist, bei dem das Material zur Herstellung der Polymerschaummatrix oder ein Teil davon sich zumindest teilweise im flüssigen Aggregatzustand befindet und diese flüssige Phase mit den Granulaten vermischt wird. Um den Mischvorgang von Polymer und Granulat bzw. Formkörpern zu erleichtern, kann es vorteilhaft sein, wenn das Polymer durch Lösen in einem geeigneten Lösungsmittel oder durch Aufschmelzen in einen flüssigen bzw. fließfähigen Zustand überführt wird. Nach dem Mischvorgang wird die Polymermatrix durch Abkühlen unter die Schmelztemperatur bzw. durch Entfernen des Lösungsmittels verfestigt. Alternativ kann der Mischungsvorgang mit dem Granulat auch auf Stufe der Ausgangsverbindungen zur Erzeugung der Polymermatrix erfolgen, d.h. mit den Monomeren oder prä-polymeren Verbindungen. Die Polymermatrix entsteht dann direkt im Verbundmaterial durch eine Polymerisations- bzw. Vernetzungsreaktion. Diese Variante ist bevorzugt, wenn die Polymermatrix zur Gruppe der Duromere zählt. In einer weiteren Ausführungsform des erfindungsgemäßen Verfahrens wird das Granulat bzw. die Formkörper mit einem ebenfalls granulierten Polymer vermischt. Die Verbindung zum Verbundmaterial erfolgt dann üblicherweise durch Erwärmen, wobei das Polymer schmilzt oder zumindest erweicht und das Granulat verklebt.

Das erfindungsgemäße Verfahren enthält vorzugsweise einen Verfahrensschritt der Verschäumung. Das Verschäumen kann mechanisch/physikalisch oder chemisch erfolgen. Beim mechanischen/physikalischen Verschäumen wird Luft oder Gas bzw. ein Gasgemisch gasförmig in eine viskose Polymermasse eingetragen und diese viskose Polymermasse anschließend gehärtet, so dass die eingetragene Luft bzw. das eingetragene Gas / Gasgemisch in Blasen in der Polymermasse eingeschlossen ist. Es können Polymerschäume auch dadurch physikalisch erzeugt werden, dass eine Polymermasse mit einem oder mehreren Treibmitteln versetzt wird, die bei Erwärmen ihren Aggregatzustand von flüssig oder fest in gasförmig ändern und so ebenfalls zur Schaumbildung führen. Geeignete und bekannte Treibmittel sind z.B. bei Raumtemperatur flüssige Kohlenwasserstoffe, wie z.B. Pentane. Sind in der erfindungsgemäßen Zusammensetzung zusätzliche Treibmittel vorhanden, können diese physikalische oder chemische Treibmittel sein. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 3 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt 1,2-Dichlorethan. Eine chemische Erzeugung von Schaum ist z.B. dadurch möglich, dass bei der Polymerisation Verbindungen entstehen, die bei den Polymerisationstemperaturen gasförmig sind. Ein typisches chemisches Treibmittel ist z. B. Wasser, welches bei Polymerisationsreaktionen entsteht, die auf einer Kondensationsreaktion basieren. Neben Wasser können auch andere chemische Treibmittel eingesetzt werden. Bei der Herstellung von Polyurethanschäumen z.B. solche, die mit den eingesetzten Isocyanaten unter Gasentwicklung reagieren, wie beispielsweise Wasser oder Ameisensäure.

Die erfindungswesentliche Offenzelligkeit der Polymerschaummatrix kann erreicht werden durch eine entsprechend abgestimmte Verschäumungs-Methode, durch geeignete Wahl der der Polymerschaummatrix zugrundeliegenden Formulierung und/oder durch den Einsatz von Zellöffnern. Dabei können alle dem Fachmann geläufigen Zellöffner verwendet werden, beispielsweise feste Füllstoffe oder inkompatible Flüssigkeiten, wie Silicone, organo-modifizierte Silicone, Polyacrylate oder Polybutadiene.

Am Beispiel eines Verbundmaterials mit geschäumter Polyurethan-Matrix sollen verschiedene Varianten des erfindungsgemäßen Verfahrens näher diskutiert werden. Geschäumtes Polyurethan ist in der Regel ein hochvernetztes, weder in üblichen Lösemitteln wie z. B. Wasser oder Aceton lösliches noch ohne Zersetzung schmelzbares Duromer. Die Mischung mit dem Granulat erfolgt daher vorzugsweise bereits auf Stufe von monomeren bzw. prä-polymeren Verbindungen. Ein Polyurethan-System zur Herstellung von Schaumstoffen weist in der Regel zwei Komponenten (A) und (B) auf, wobei die eine Komponente aus Verbindungen mit reaktionsfähigen Wasserstoffatomen zusammengesetzt ist, die sogenannte Polyol-Komponente (A), und die zweite Komponente (B) ein oder mehrere Isocyanate aufweist. Übliche Hilfs- und Zusatzstoffe können in die Polyol-Komponente (A) einformuliert oder separat zudosiert werden. Die Granulate bzw. Formkörper werden bevorzugt mit der Polyol-Komponente, der Isocyanat-Komponente oder - besonders bevorzugt - mit einer frischen Reaktionsmischung aus diesen Komponenten vermischt. Die beiden erstgenannten Fälle eignen sich nur für niedrige Füllgrade und kleine Korndurchmesser der Granulate, da die Granulate bzw. Formkörper in der Komponente (A) oder (B) vordispergiert werden müssen und diese Dispersion anschließend mit der zweiten Komponente innig vermischt werden muss. Der bevorzugte Fall einer Einarbeitung der Granulate/Formkörper in eine frische Reaktionsmischung aus (A)- und (B)-Komponente erlaubt die problemlose Verarbeitung großer Korndurchmesser. Das Einarbeiten von Granulat/Formkörpern in der Reaktionsmischung kann dabei vor dem Überführen in die Form erfolgen oder aber Granulat/Formkörper werden als Packung bzw. Schüttung in einer Hohlform vorgelegt und diese mit der flüssigen, aufschäumenden Reaktionsmischung infiltriert bzw. die Körner umschäumt. Zur Herstellung von Dämmplatten ist auch ein kontinuierliches Verfahren analog der Produktion von Polyurethan-Dämmplatten nach dem Doppel-Transportband-Verfahren vorstellbar. Die Granulate/Formkörper können dabei entweder vor oder nach dem Auftrag der Polyurethan-Reaktionsmischung auf die untere Deckschicht gestreut werden, wobei die einzelnen Körner umschäumt werden. Die Aushärtung des Verbundwerkstoffs erfolgt dann durch die Polyaddtitionsreaktion unter Vernetzung zum Polyurethan.

Die typische Zusammensetzung eines Polyurethan-Systems wird im Folgenden näher beschrieben:
Als Polyolkomponenten (A) können die für die Formulierung von Isolierschaumstoffen üblichen Verbindungen verwendet werden, beispielsweise Polyetherpolyole und Polyesterpolyole. Polyetherpolyole können durch Umsetzung von mehrwertigen Alkoholen oder Aminen mit Alkylenoxiden gewonnen werden. Polyesterpolyole basieren vorzugsweise auf Estern mehrwertiger Carbonsäuren (meist Phthalsäure oder Terephthalsäure) mit mehrwertigen Alkoholen (meist Glycolen).
Als (Poly-)Isocyanatkomponente (B) können die für die Formulierung von Isolierschaumstoffen üblichen Verbindungen verwendet werden, beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten analogen mit einer mittleren Funktionalität von 2 bis 4.

Ein geeignetes Verhältnis von Isocyanat und Polyol, ausgedückt als Index der Formulierung, liegt im Bereich von 50-500, bevorzugt 100-350. Der Index beschreibt dabei das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Als Hilfs- und Zusatzstoffe können die für die Formulierung von Isolierschaumstoffen üblichen Verbindungen verwendet werden, darunter Katalysatoren, Zellstabilisatoren, Treibmittel, Flammschutzmittel, Füllstoffe, Farbstoffe und Lichtschutzmittel.

Geeignete Katalysatoren im Sinne dieser Erfindung sind z. B. Substanzen die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Einsatzmengen richten sich nach dem Typ des Katalysators und liegen üblicherweise im Bereich von 0,05 bis 5 Gewichtsteilen, bzw. 0,1 bis 10 Gewichtsteilen für Kaliumsalze, bezogen auf 100 Gewichtsteile Polyol. Geeignete Zellstabilisatoren sind z. B. oberflächenaktive Substanzen wie beispielsweise organische Tenside oder bevorzugt Silicon-Tenside (Polyether-Polydimethylsiloxan-Copolymere). Typische Einsatzmengen an Polyethersiloxan-Zellstabilisatoren liegen bei 0,5 bis 5 Gewichtsteilen pro 100 Gewichtsteile Polyol, bevorzugt bei 1 bis 3 Gewichtsteilen pro 100 Gewichtsteile Polyol.

Geeignete Zellöffner sind z. B. inkompatible Flüssigkeiten wie beispielsweise Siliconöle, organo-modifizierte Silicone, Polyacrylate oder Polybutadiene. Typische Einsatzmengen an Zellöffnern liegen bei 0,01 bis 5 Gewichtsteilen pro 100 Gewichtsteile Polyol, bevorzugt bei 0,1 bis 3 Gewichtsteilen pro 100 Gewichtsteile Polyol. Geeignete Zellöffner werden z. B. unter den Handelsnamen TEGOSTAB^{®} und ORTEGOL^{®} von Evonik Industries AG vertrieben.

Der schäumbaren Formulierung kann Wasser als chemisches Treibmittel zugesetzt werden, da es mit Isocyanaten unter Entwicklung von Kohlendioxid-Gas reagiert. Geeignete Wasser-Gehalte im Sinne dieser Erfindung hängen davon ab, ob zusätzlich zum Wasser noch physikalische Treibmittel eingesetzt werden oder nicht. Bei rein Wasser-getriebenen Schäumen liegen die Werte für den Wassergehalt vorzugsweise bei 1 bis 20 Gewichtsteilen pro 100 Gewichtsteile Polyol, werden zusätzlich andere Treibmittel eingesetzt, verringert sich die Einsatzmenge vorzugsweise auf 0,1 bis 5 Gewichtsteile Wasser pro 100 Gewichtsteile Polyol. Geeignete physikalische Treibmittel wurden bereits genannt.

Isolationsschaumstoffe für die Wärmedämmung von Gebäuden unterliegen Brandschutzanforderungen und müssen vorzugsweise flammhemmend ausgerüstet werden. Prinzipiell sind alle gebräuchlichen Flammschutzmittel geeignet. Vorzugsweise werden als Flammschutzmittel bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) oder organische Phosphonate, z.B. Dimethylmethanphosphonat (DMMP), Dimethylpropanphosphonat (DMPP) oder Feststoffe wie Ammoniumpolyphosphat (APP) oder roter Phosphor eingesetzt. Desweiteren sind als Flammschutzmittel halogenierte Verbindungen, beispielsweise halogenierte Polyole, sowie Feststoffe wie Blähgraphit und Melamin geeignet.

Eine typische Polyurethan- bzw. Polyisocyanurat-Isolierschaumformulierung im Sinne dieser Erfindung würde ein Raumgewicht von 5 bis 50 kg/m³ ergeben und hätte die folgende Zusammensetzung:

| Komponente | | Gewichtsanteil |
|---|---|---|
| Polyol | | 100 |
| (Amin-)Katalysator | | 0,05 bis 5 |
| Kalium-Trimerisierungskatalysator | | 0 bis 10 |
| Stabilisator | | 0,5 bis 5 |
| Zellöffner | | 0 bis 5 |
| Wasser | | 0,1 bis 20 |
| Treibmittel | | 40 |
| Flammschutzmittel | | 0 bis 50 |
| Isocyanat-Index: | 50 bis 500 | |

Die Verarbeitung der erfindungsgemäßen Formulierungen zu Hartschaumstoffen kann nach allen dem Fachmann geläufigen Verfahren erfolgen, beispielsweise im Handmischverfahren oder bevorzugt mit Hilfe von Hochdruck-Verschäumungsmaschinen.

Die Menge an einzusetzenden Granulaten und einzusetzendem Polymeren bzw. deren Ausgangstoffen wird vorzugsweise so gewählt, dass der erhaltene Verbundwerkstoff die oben als bevorzugt angegebenen Masse an Granulaten und/oder das oben als bevorzugt angegebene Massenverhältnis aufweist.

Der erfindungsgemäße Verbundwerkstoff, insbesondere die Polymerschaummatrix kann entweder direkt verwendet werden oder aus einem größeren Block herausgearbeitet werden, wobei verschiedenste mechanische Verfahren wie Schneiden, Sägen oder Fräsen zum Einsatz kommen können. Die Polymerschaummatrix kann aber auch direkt in einer Hohlform mit der gewünschten Geometrie hergestellt werden.

Soll der Verbundwerkstoff eine offenzellige Polymerschaummatrix aufweisen, in welcher ein Unterdruck gegenüber dem Umgebungsdruck (Normaldruck von 1 bar) vorliegt, so kann dies dadurch erreicht werden, dass in dem erfindungsgemäßen die Polymerschaummatrix evakuiert und gegebenenfalls gasdicht verkapselt wird.

Um in dem Porensystem der Polymerschaummatrix (und den offenen und zugänglichen Poren des Granulats) einen Unterdruck zu erzeugen, wird der Verbundwerkstoff vorzugsweise einem äußeren Unterdruck und/oder einer erhöhten Temperatur ausgesetzt und vorzugsweise unter diesen Bedingungen verkapselt. Unter Verkapseln wird das Ausrüsten mit einer gasundurchlässigen Barriereschicht verstanden. Bei einer Verkapselung bei oder unter Raumtemperatur beträgt der Druck (Unterdruck), bei dem die Ausrüstung mit der Barriereschicht erfolgt, vorzugsweise kleiner 500 mbar, bevorzugt von 0,001 bis 200 mbar. Werden beim Aufbringen der Barriereschicht erhöhte Temperaturen angewendet, dann braucht der Druck nicht so weit abgesenkt werden, da sich beim Abkühlen der Innendruck weiter reduziert.

Zur Herstellung der Barriereschicht können verschiedene Materialien eingesetzt werden. Vorzugsweise werden diffusionsdichte Materialien wie Metalle, Kunststoffe oder Gläser, entweder alleine oder in Kombination mit anderen Werkstoffen, verwendet. Um einen geringen Beitrag der Barriereschicht zur Wärmeleitung zu erzielen, ist eine geringe Wandstärke, vorzugsweise kleiner 1 mm, bei dennoch hoher Diffusionsdichtigkeit anzustreben. Bevorzugtes Verfahren zur Herstellung der Barriereschicht ist das Umhüllen des Kompositformkörpers mit einer gasdichten Folie. Hierzu werden bevorzugt ein- oder mehrlagige, vorzugsweise mehrlöagige Polymerfolien verwendet, welche eine (oder mehrere) dünne Metallschicht(en) als Diffusionssperre enthalten. Zum Verschließen der Folie kann diese z. B. verklebt oder verschweißt werden.

Ein weiteres Verfahren zur Verkapselung des Kompositformkörpers ist die Versiegelung durch unter Vernetzung aushärtende Polymere. Dazu kann ein Formkörper der Polymerschaummatrix mit eingebettetem Granulat in eine flüssige Zubereitung des Kapselmaterials eingetaucht, damit übergossen oder besprüht oder anderweitig oberflächlich benetzt werden. Alternativ zu einem chemisch reaktiven Verkapselungsmaterial kann auch eine Schmelze eines thermoplastischen Polymers verwendet werden. Es kann vorteilhaft sein, Kombinationen aus den zuvor genannten Verkapselungs-Verfahren in zwei- oder mehrstufigen Schritten anzuwenden.

Es kann vorteilhaft sein, die Zusammensetzung der Gasatmosphäre in den offenzelligen Poren der Polymerschaummatrix (und ggf. den offenzelligen Granulaten) vor der Evakuierung (der Einstellung des Drucks) gezielt einzustellen. Vorzugsweise wird die Gaszusammensetzung so gewählt, dass eine möglichst niedrige Wärmeleitfähigkeit erreicht wird. Dabei sind vorzugsweise zwei verschiedene Parameter zu beachten: zum einen die Gasphasenwärmeleitfähigkeit der Gaszusammensetzung und zum anderen die freie Weglänge der Gasmoleküle. Bevorzugte Gase mit niedriger Gasphasenwärmeleitfähigkeit sind z. B. die typischen Treibgase, wie beispielsweise CO₂, Kohlenwasserstoffe mit 3 bis 5 Kohlenstoff-Atomen, bevorzugt cyclo-, iso- und n-Pentan, Fluorkohlenwasserstoffe (gesättigt sowie ungesättigt), bevorzugt HFC 245fa, HFC 134a und HFC 365mfc, Fluorchlorkohlenwasserstoffe (gesättigt sowie ungesättigt), bevorzugt HCFC 141b, Sauerstoff-haltige Verbindungen wie Methylformiat und Dimethoxymethan, oder Chlorkohlenwasserstoffe, bevorzugt 1,2-Dichlorethan. Bei fein strukturierten Porensystemen und niedrigen Gasdrücken kann die Gasphasenwärmeleitfähigkeit jedoch unter den für die Gaszusammensetzung zu erwartenden Wert absinken. Diesen Effekt nennt man Knudsen-Effekt. Er tritt auf, wenn die freie Weglänge der Gasmoleküle größer ist als der Durchmesser der Poren, in denen sich das Gas befindet. Stöße der Gasmoleküle mit der Porenwandung werden dann wahrscheinlicher als Stöße der Gasmoleküle untereinander. Dies kann soweit gehen, dass Stöße der Gasmoleküle untereinander vollständig unterdrückt werden. Ohne Stöße findet keine Übertragung der Wärmeenergie statt und die Gasphasenwärmeleitung wird ausgeschaltet. Im Gegensatz zur Wärmeleitfähigkeit steigt die freie Weglänge mit sinkender Molmasse der Gasmoleküle. Es kann daher vorteilhaft sein, ein Gas mit kleiner Molmasse, vorzugswese kleiner 21 g/mol, beispielsweise Wasserstoff, Helium, Methan, Ammoniak, Wasser oder Neon, als Isolationsgas in den Poren der Granulat-Körner bzw. Formkörper einzusetzen, falls der Knudsen-Effekt die eigentlich hohe Wärmeleitfähigkeit dieser Gase überkompensiert. Das Einstellen der Gaszusammensetzung in den offenzelligen Poren der Polymerschaummatrix kann z.B. so erfolgen, dass die Polymerschaummatrix ein oder mehrmals einem Unterdruck ausgesetzt wird, und anschließend mit der gewünschten Gaszusammensetzung beaufschlagt wird. Ebenso ist es möglich die Polymerschaummatrix ein oder mehrfach einer unter Überdruck stehenden Gasatmosphäre auszusetzen und jeweils wieder zu entspannen. Auf beide Weisen reichert sich die gewünschte Gasatmosphäre in den offenzelligen Poren an.

Mittels des erfindungsgemäßen Verfahrens können die erfindungsgemäßen Verbundwerkstoffe bzw. die erfindungsgemäßen Vakuum-Isolationselemente erhalten werden.

Die erfindungsgemäßen Verbundwerkstoffe bzw. die erfindungsgemäßen Vakuum-Isolationselemente können für verschiedenste Isolationszwecke verwendet werden. Bevorzugt werden sie zur Dämmung/Isolierung von Gebäuden, von Raum-, Luft-, See- und/oder Land-Fahrzeugen oder von Teilen von Kühl- oder Heiz-Anlagen, - Aggregaten verwendet. Die erfindungsgemäßen Verbundwerkstoffe bzw. die erfindungsgemäßen Vakuum-Isolationselemente können z. B. als Dämmung in Kühlgeräten und Warmwasserspeichern oder zur Isolation von Rohrleitungen (z.B. Nah- und Fernwärmeleitungen) eingesetzt werden.

In manchen Anwendungsgebieten, bei denen ein Hohlraum in einem Bauteil mit einem Dämmstoff ausgefüllt werden soll, kann die Hülle des Bauteils die Funktion der gasdichten Kapsel übernehmen. Dies gilt beispielsweise für die Füllung von Profilen für Konstruktions-Zwecke, beispielsweise Fenster- oder Türrahmen, Rolladenelemente, Sektional-Tore usw. Diese Profile stellen dann den erfindungsgemäßen Verbundwerkstoff dar. Diese erfindungsgemäßen Verbundwerkstoffe haben dabei den Vorteil, dass die offenzelligen Polymerschaummatrizen, die die offenzelligen Granulate eingebettet enthalten, direkt im zu füllenden Hohlraum hergestellt werden können.

Entsprechende erfindungsgemäße Gegenstände zeichnen sich dadurch aus, dass sie einen erfindungsgemäßen Verbundwerkstoff aufweisen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1: Herstellung von Granulaten

80 Gew.-% AEROSIL^{®} 200 (Pyrogene Kieselsäure von der Firma Evonik Industries AG, BET-Oberfläche 200 m²/g), 15 Gew.-% AROSPERSE 15 (Thermalruß von der Firma Orion Engineered Carbons) und 5 Gew.-% Glasfasern (Glasfaserschnitzel, ca. 12 mm Faserlänge) wurden innig vermischt. Diese Mischung wurde in Portionen zu je 0,6 g in ein zylindrisches Presswerkzeug mit 2 cm Durchmesser überführt und zu Tabletten von je 1 cm Höhe mithilfe einer hydraulischen Presse verpresst. Die Tabletten hatten eine Dichte von ca. 200 kg/m³. Zur oberflächlichen Hydrophobisierung wurden die Tabletten in eine Mischung aus 5 Gewichtsteilen Dichlordimethylsilan und einem Gewichtsteil Chlortrimethylsilan für 5 Sekunden eingetaucht und anschließend an der Luft für 2 Stunden getrocknet. Zur weiteren Konditionierung wurden die Tabletten im Vakuum-Trockenschrank bei 50 °C und 1 mbar für 2 h nachbehandelt.

### Beispiel 2: Herstellung eines Verbundwerkstoffes durch Einschäumen von Granulaten mit Polyurethan-Hartschaum

Als Polymer-Matrix wurde eine Polyurethan-Hartschaumformulierung gemäß Tabelle 1 verwendet.

**Tabelle 1: offenzellige PUR-Formulierung**

| **Komponente** | **Gewichtsanteil** |
|---|---|
| Caradol 520-07* | 100 Teile |
| N,N-Dimethylaminoethoxyethanol | 1,5 Teile |
| Wasser | 4,0 Teile |
| TEGOSTAB^{®} B 8444 ** | 1,0 Teile |
| ORTEGOL^{®} 500 *** | 0,5 Teile |
| | |
| Desmodur 44V20L **** | 205,0 Teile |

| | |
|---|---|
| * Polyetherpolyol der Firma Shell ** Stabilisator der Firma Evonik Industries AG *** Zellöffner der Firma Evonik Industries AG **** polymeres MDI der Firma Bayer, 200 mPa*s, 31,5 Gew.-% NCO, Funktionalität 2,7 | |

Die Durchführung der Polyurethan-Verschäumungen erfolgte im Handmischverfahren. Es wurden Polyol, Amin-Katalysator, Wasser, Schaumstabilisator (TEGOSTAB^{®} B 8444) und Zellöffner (ORTEGOL^{®} 500) in einen Becher eingewogen und mit einem Tellerrührer (6 cm Durchmesser) 30 s bei 1000 Upm vermischt. Jetzt wurde das MDI zugegeben, die Reaktionsmischung mit dem beschriebenen Rührer 5 s bei 3000 Upm verrührt und sofort in eine mit Papier ausgekleidete, nach oben offene Holzkiste von 27 cm x 27 cm x 27 cm Größe überführt. Gleichzeitig mit dem Eingießen der Reaktionsmischung wurden so viele Tabletten aus Beispiel 1 in die Kiste geschüttet, dass sich eine ca. 10 cm hohe und gut von der Reaktionsmischung benetzte Schüttung ergibt. Die Einsatzmenge an Schaumformulierung war dabei so bemessen, dass der Schaum noch etwa 5 cm über die Schüttung der Tabletten hinaus stieg. Nach 10 min wurde der Verbundwerkstoff entformt. Aus dem Block wurde mit einer Bandsäge horizontal mit 2,5 cm Abstand vom Boden eine 2,5 cm dicke Platte herausgeschnitten. Von den Rändern wurden jeweils 3,5 cm abgesägt, so dass ein 20 cm x 20 cm x 2,5 cm messender Probekörper erhalten wurde.

### Beispiel 3: Herstellung eines Vakuum-Isolationspaneels aus dem Verbundwerkstoff

Die in Beispiel 2 hergestellte Platte aus dem Verbundwerkstoff wurde in einer Vakuum-Kammer über 2 h evakuiert, wobei ein Restdruck von ca. 1 mbar erreicht wurde. Unter diesem Druck wurde die Platte in eine Hülle aus einer metallisierten Folie (Mehrschicht-Laminat von der Firma TOYO mit PET-Außenschicht, Aluminium-Barriere-Schicht und Polyethylen-Innenschicht) eingeschweißt, so dass die Platte gasdicht abgeschlossen war. Der überstehende Rand der Folie wurde bis an die Schweißnaht heran abgeschnitten. Das erhaltene Vakuum-Isolationspaneel wurde und die Wärmeleitfähigkeit mit einem Wärmeleitfähigkeits-Meßgerät vom Typ Hesto HLC-A90 gemessen. Der Messwert betrug 8,9*10⁻³ W*m⁻¹*K⁻¹.

## Patentansprüche

1. Verbundwerkstoff umfassend eine offenzellige Polymerschaummatrix enthaltend ein oder mehrere Polymere und eingebettet in die Polymerschaummatrix Granulate, die eine offene Porosität aufweisen.

2. Verbundwerkstoff gemäß Anspruch 1, **dadurch gekennzeichnet, dass** er eine gaspyknometrische Offenzelligkeit von größer 50%, vorzugsweise von größer 80% aufweist.

3. Verbundwerkstoff gemäß Anspruch 1 oder 2, **dadurch gekennzeichnet, dass** die Polymerschaummatrix ein Polyurethan- oder Polyisocyanurat-Schaumstoff ist.

4. Verbundwerkstoff gemäß zumindest einem der Ansprüche 1 bis 3, **dadurch gekennzeichnet, dass** die Granulate im Wesentlichen aus Materialien mit einer BET-Oberfläche von größer 5 m²/g, besonders bevorzugt von 50 m²/g bis 1000 m²/g (nach ISO 9277), hergestellt werden.

5. Verbundwerkstoff gemäß zumindest einem der Ansprüche 1 bis 4, **dadurch gekennzeichnet, dass** die Granulate im Wesentlichen aus kompaktierten Pulvern aus pyrogener Kieselsäure oder Fällungskieselsäure bestehen.

6. Verbundwerkstoff gemäß zumindest einem der Ansprüche 1 bis 5, **dadurch gekennzeichnet, dass** in den offen Poren ein Druck von kleiner 500 mbar, bevorzugt von 0,001 bis 200 mbar vorliegt.

7. Verbundwerkstoffe gemäß Anspruch 6, **dadurch gekennzeichnet, dass** die Polymerschaummatrix, eine gasdichte Hülle aus Metall, Glas, Kunststoff oder einem Verbund aus diesen Materialien - beispielsweise einer metallisierten Kunststofffolie - aufweist.

8. Verbundwerkstoff gemäß zumindest einem der Ansprüche 1 bis 7, **dadurch gekennzeichnet, dass** der Verbundwerkstoff ein Vakuum-Isolationselement ist oder als Vakuum-Isolationselement verwendet wird.

9. Verfahren zur Herstellung eines Verbundwerkstoffs gemäß zumindest einem der Ansprüche 1 bis 8, **dadurch gekennzeichnet, dass** ein Material zur Herstellung einer Polymerschaummatrix mit Granulaten vermischt wird, die eine offene Porosität aufweisen, und aus dieser Mischung eine offenzellige Polymerschaummatrix erzeugt wird, in welcher die Granulate eingebettet sind.

10. Verfahren nach Anspruch 9, **dadurch gekennzeichnet, dass** das Material zur Herstellung einer Polymerschaummatrix ein Polymer oder eine Mischung von Polymeren ist oder die Edukte zur Erzeugung des/der Polymeren sind und dass ein Verfahrensschritt der Verschäumung enthalten ist.

11. Verfahren nach Anspruch 8 oder 9, **dadurch gekennzeichnet, dass** die Polymerschaummatrix evakuiert und gasdicht verkapselt wird.

12. Verwendung eines Verbundwerkstoffs gemäß einem der Ansprüche 1 bis 8, als Isolations- und/oder Dämmmaterial.

13. Verwendung nach Anspruch 13, **dadurch gekennzeichnet, dass** das Isolations-/Dämmmaterial zur Dämmung/Isolierung von Gebäuden einschließlich Fenstern, Türen und Rollladenkästen, von Raum-, Luft-, See- und/oder Land-Fahrzeugen, von Rohrleitungen, oder von Teilen von Kühl- oder Heiz-Anlagen, -Aggregaten, Kühlgeräte, Warmwasser-/Kältemittelspeicher, Schwimmbadabdeckungen und - isolationen verwendet wird.

14. Gegenstand, **dadurch gekennzeichnet, dass** er einen Verbundwerkstoff gemäß einem der Ansprüche 1 bis 8 aufweist.
